(19) Europäisches Patentamt
European Patent Office
Office européen des brevets

(11) **EP 2 811 544 A1**

(12) **EUROPEAN PATENT APPLICATION**
published in accordance with Art. 153(4) EPC

(43) Date of publication:
**10.12.2014 Bulletin 2014/50**

(51) Int Cl.:
*H01M 2/16* (2006.01)   *H01M 6/06* (2006.01)

(21) Application number: **13743895.8**

(86) International application number:
**PCT/JP2013/050693**

(22) Date of filing: **16.01.2013**

(87) International publication number:
**WO 2013/114949 (08.08.2013 Gazette 2013/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.01.2012 JP 2012017573**

(71) Applicant: **Nippon Kodoshi Corporation
Kochi-shi, Kochi 781-0395 (JP)**

(72) Inventors:
• **KUBO Yoshiyo**
**Kochi-shi**
**Kochi 781-0395 (JP)**
• **NAKAJIMA Osamu**
**Kochi-shi**
**Kochi 781-0395 (JP)**
• **OGAWA Kentarou**
**Kochi-shi**
**Kochi 781-0395 (JP)**

(74) Representative: **Betten & Resch
Theatinerstrasse 8
80333 München (DE)**

(54) **SEPARATOR FOR ALKALINE BATTERY AND ALKALINE BATTERY**

(57)    Provided is a separator for an alkaline battery, capable of suppressing reduction in the characteristics of the alkaline battery after storage. The separator for an alkaline battery is interposed between the cathode and anode of the alkaline battery, is used to isolate the active material of both electrodes, and is configured by including 20 - 90 mass% cellulose fiber and having the remainder being an alkali-resistance synthetic fiber. The cellulose fiber includes a dissolving pulp.

EP 2 811 544 A1

**Description**

Technical Field

The present invention relates to a separator for an alkaline battery to be used in alkaline batteries such as an alkaline manganese battery, silver oxide battery and zinc-air battery, and an alkaline battery using the separator.

Background Art

Conventionally, characteristics of a separator isolating a cathode active material and a anode active material in an alkaline battery have been required to prevent an internal short circuit caused by the contact of the cathode active material and the anode active material, to prevent an internal short circuit caused by a dendrite of electroconductive zinc oxide or the like, to have durability for not generating shrinkage and deterioration against an electrolytic solution of potassium hydroxide and a cathode active material such as manganese dioxide, nickel oxyhydroxide, or silver oxide, and not to disturb ionic conduction by holding a sufficient amount of the electrolytic solution for generating an electromotive reaction, for a long period of time.

As a separator for an alkaline battery having such characteristics, there is used a mixed paper of a synthetic fiber and a cellulose fiber, obtained by including a vinylon fiber or a nylon fiber being an alkali-resistance synthetic fiber as a main body, by blending, to the main body, a mercerized pulp that is excellent in alkali- resistance, or a rayon fiber, a polynosic fiber, a regenerated cellulose fiber such as an organic solvent-spun cellulose fiber or the like, and furthermore adding an easily-soluble polyvinyl alcohol fiber dissolving in water at 60°C to 90°C as a binder.

In the manufacturing of the separator, cellulose fibers capable of being fibrillated such as the mercerized pulp, the polynosic fiber, an organic solvent-spun cellulose fiber etc. are subjected to refined, if necessary, and are used as a fibrillated fiber. The blending of the fibrillated cellulose fiber can give denseness to the separator and can prevent the generation of internal short circuit caused by a dendrite.

Among these cellulose fibers, the mercerized pulp can be manufactured by a simple process of immersing a pulp in a high-concentration alkaline solution, and then removing the alkaline solution. In the manufacturing of the mercerized pulp, there are not required complicated processes of dissolving a cellulose pulp required for manufacturing regenerated cellulose fibers such as rayon and organic solvent-spun cellulose fibers, of spinning a regenerated cellulose fiber from the dissolved solution, of recovering the solvent, and the like. Accordingly, the mercerized pulp is inexpensive.

A separator for an alkaline battery, which is paper-made by blending an alkali-resistance synthetic fiber such as a vinylon fiber or the like and an easily-soluble polyvinyl alcohol fiber to be a binder to the mercerized pulp, is used broadly (for example, see Patent Literature 1, Patent Literature 2). Alternately, a separator for an alkaline battery, which is paper-made by blending a regenerated cellulose fiber in addition to these mercerized pulp, the synthetic fiber and the easily-soluble polyvinyl alcohol fiber, is used broadly (for example, see Patent Literature 3).

In Patent Literature 1, there is proposed a separator for an alkaline battery that is obtained by subjecting a mercerized wood craft pulp alone to papermaking, or by subjecting a mixture prepared by adding at least one kind selected from the group consisting of a synthetic fiber, synthetic resin pulp and alkali-resistance resin to 50 mass% or more of the mercerized wood craft pulp, to mixed papermaking.

Furthermore, in Patent Literature 2, along with the requirement for a mercury-free alkaline battery, there is proposed a separator for an alkaline battery in which a refinable alkali- resistance cellulose fiber such as the mercerized pulp or the polynosic fiber and a synthetic fiber are subjected to mixed papermaking and are bound through the use of a binder such as a polyvinyl alcohol fiber. The separator for an alkaline battery includes an alkali- resistance cellulose fiber in the range of 10 mass% - 50 mass%, and the refining degree of the alkali- resistance cellulose fiber is set to be in the range of 500 ml - 0 ml of a CSF value.

Moreover, in Patent Literature 3, regarding the combined use of the mercerized pulp and a regenerated cellulose fiber, there is proposed a separator for an alkaline battery characterized by including an alkali- resistance synthetic fiber, a fibrillated organic solvent-spun cellulose fiber having a refining degree of 10 to 550 ml as a CSF value and the mercerized pulp having a refining degree of 450 ml or more of a CSF value, at the mass ratio of respective materials of 30 to 60%:5 to 20%:35 to 50%.

Meanwhile, as the organic solvent-spun cellulose fiber used for the separator described in Patent Literature 3, there is known a regenerated d cellulose fiber referred to as, for example, Lyocell (registered trade mark) or Tencel (registered trade mark). In addition, the organic solvent-spun cellulose fiber is defined under the name of Lyocell in the terminology for fabric, specified in JIS and ISO standards, and hereinafter, the organic solvent-spun cellulose fiber will be described as the Lyocell fiber.

Citation List

Patent Literature

PTL 1: Japanese Patent Laid-Open No. 54-87824
PTL 2: Japanese Patent Laid-Open No. 02-119049
PTL 3: Japanese Patent Laid-Open No. 2006-236808

Summary of Invention

Technical Problem

A mercerized pulp used for a separator for an alkaline battery has a high content ratio of α-cellulose, and has a small component that dissolves in an alkaline electrolytic solution. In addition, the mercerized pulp has a small dimensional shrinkage in an alkaline electrolytic solution, and thus it is a cellulose fiber suitable for the separator for an alkaline battery. Furthermore, when a mercerized pulp fibrillated by refining treatment is blended with the separator, a dense separator excellent in shielding characteristics of the active material of both electrodes is obtained inexpensively, and thus the mercerized pulp is widely used for the separator for an alkaline battery.

However, there is a problem of increasing the corrosion of zinc alloy powder being the anode active material of an alkaline battery, through the use of a separator with which the mercerized pulp is blended. Consequently, the problems of the increase in a gas generation amount and of the deterioration of characteristics after storage of the alkaline battery arise.

In order to solve the problem, in the present invention, there are provided a separator for an alkaline battery that generates a small amount of gas and is capable of suppressing reduction in the characteristics of the alkaline battery after storage, and an alkaline battery provided with the separator.

Solution to Problem

The separator for an alkaline battery of the present invention is a separator interposed between the cathode and anode of the alkaline battery, is used in order to isolate the active material of both electrodes, and includes 20 - 90 mass% a cellulose fiber, the remainder is formed of an alkali-resistance synthetic fiber, and the cellulose fiber includes a dissolving pulp.

Furthermore, the alkaline battery of the present invention is provided with the above-described separator for an alkaline battery as a separator isolating the cathode active material and the anode active material.

Advantageous Effects of Invention

According to the present invention, a separator for an alkaline battery capable of suppressing the reduction in the characteristics of the alkaline battery after storage, and the alkaline battery can be provided.

Brief Description of Drawings

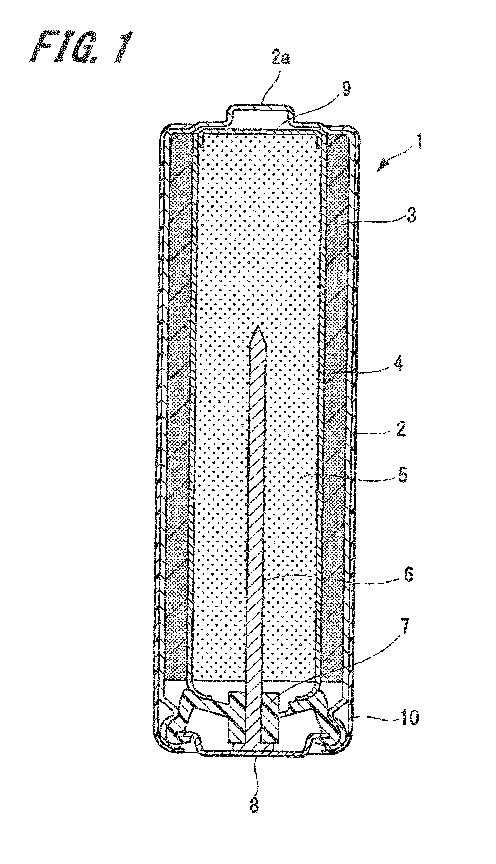

Fig. 1 is a vertical cross-sectional view at the middle of the alkaline battery that uses the separator for an alkaline battery according to the present invention.

Description of Embodiments

Before explaining specific embodiments of the present invention, the outline of the present invention will be explained.

The present invention provides an alkaline battery excellent in the storing characteristics, by reducing corrosion against zinc alloy powder in a separator for an alkaline battery.

Among cellulose fibers conventionally used for the separator for an alkaline battery, a mercerized pulp is a pulp obtained by subjecting a chemical pulp for papermaking having been digested mainly by a sulfate method, to an immersion treatment (mercerizing treatment) into a solution sodium hydroxide solution having a high concentration of 18 mass% or more.

By the mercerizing treatment, alkali-soluble components such as low-molecular weight cellulose and hemicellulose are removed from the chemical pulp for papermaking, to thereby give a pulp with high purity such that the content ratio of α-cellulose is 97% or more. Furthermore, all the crystalline structure of cellulose I of the chemical pulp changes to the crystalline structure of cellulose II, by the mercerizing treatment. Consequently, the decrease in the dimensional shrinkage in the alkaline electrolytic solution gives a pulp excellent in alkali-resistance suitable for the separator for an alkaline battery.

As described above, the mercerized pulp can be manufactured in a simple process of immersing a chemical pulp for papermaking into an alkaline solution having a high concentration, and after that, removing the alkaline solution. Therefore, the mercerized pulp scarcely undergoes cleavage of the cellulose molecular chain in the manufacturing thereof and is formed of cellulose with a higher polymerization degree than a regenerated cellulose fiber. Consequently, the mercerized pulp is hardly soluble in the alkaline electrolytic solution, and is excellent in alkali resistance as compared with a regenerated cellulose fiber.

However, recently, the corrosion of zinc alloy powder being a anode active material of an alkaline battery is reported when a separator with which a mercerized pulp is blended is used. The corrosion of zinc alloy powder is a phenomenon in which the zinc alloy powder reacts with the electrolytic solution without relation to the electromotive reaction of the battery, to thereby generate hydrogen gas, and zinc oxide or zinc hydroxide as reaction products.

When the gas-generation amount caused by the corrosion of the zinc alloy powder rapidly increases, the pressure inside the battery rises and a possibility of leakage of the electrolytic solution increases. In addition, even if the liquid leakage is not generated, when the battery is stored for a long period of time, zinc oxide or zinc hydroxide caused by the corrosion is precipitated around the zinc alloy powder of the anode, and the electron conduction between the zinc alloy powders is reduced. Consequently, the internal resistance of the battery increases. Furthermore, the anode active material is also consumed. Therefore, in the alkaline battery using the separator with which the mercerized pulp is blended, the capacity of the battery is reduced by the storage for a long period of time.

In past alkaline batteries, there was used a anode in which the addition of mercury to zinc powder amalgamated the zinc surface. The amalgamated zinc powder has a sufficiently high hydrogen overvoltage and thus the corrosion is hardly generated. Accordingly, even when the separator with which the mercerized pulp is blended is used, the corrosion of the anode active material is hardly generated, to thereby give almost no influence on the generation amount of hydrogen gas and battery performances.

However, from the subsequent viewpoint of the prevention of environmental pollution, a mercury-free material is requested, and the anode of amalgamated zinc has disappeared, excluding the case remaining a little in button type alkaline batteries, in other alkaline batteries. Nowadays, a zinc alloy powder, which has an improved corrosion resistance by adding metals such as aluminum, bismuth and indium instead of mercury, is used as a anode active material of an alkaline battery.

However, when the separator with which the mercerized pulp has been blended is used for an alkaline battery including a mercury-free zinc alloy powder as the anode active material, the corrosion of the anode as described above is accelerated, and there arises problems of the increase in a hydrogen gas generation amount and the reduction in the performance of the battery after storage. Meanwhile, it is known that the corrosion resistance of the anode active material is enhanced through the use of a zinc alloy powder in which the addition rate of the indium is raised. However, since indium is also used for a transparent electroconductive film of a flat panel display, it is very expensive. Therefore, from the viewpoint of cost reduction of the zinc alloy powder, the addition amount of a rare metal such as indium tends to be made as small as possible. Such a tendency works also as a cause, and in particular, the corrosion of zinc alloy powder by the separator with which the mercerized pulp is blended becomes the problem recently.

For the problems, the present inventors studied on the corrosion of zinc alloy powder and, as the result, found that the corrosion of zinc alloy powder is large and the gas generation amount is large in the case of a mercerized pulp which is obtained by subjecting a pulp for papermaking only to a treatment with a high-concentration NaOH solution of 18 mass% or more, but that, in contrast, the gas generation amount is reduced in the case of a dissolving pulp.

From the result of the study, the inventors found that, by blending the dissolving pulp to a separator in place of the conventional mercerized pulp, the corrosion of zinc alloy powder of an alkaline battery anode is suppressed and a separator with a small gas generation amount is obtained.

According to the study result of the present inventors, by the mercerizing treatment, a sizable percentage of hemicellulose included in a chemical pulp for papermaking such as wood is removed and a pulp with a high content ratio of α-cellulose is obtained. However, in the case of the conventional mercerized pulp, even when the content ratio of α-cellulose is 97% or more, hemicellulose hardly soluble in an alkaline solution remains in the pulp. Therefore, in the case of a separator including the conventional mercerized pulp, the hemicellulose remaining in the mercerized pulp is gradually eluted in an alkaline electrolytic solution composed of a 30 - 40 mass% potassium hydroxide (KOH) solution. Then, since the hemicellulose eluted in the electrolytic solution brings about the corrosion of zinc alloy powder, the gas generation amount is large and the storage characteristics of the battery are reduced.

Meanwhile, the hemicellulose is a general term for polysaccharide other than cellulose contained in a wood pulp and a non-wood pulp. The main component of a pulp is cellulose, and cellulose is a crystalline polysaccharide in which glucose alone is polymerized linearly. On the other hand, hemicellulose is polysaccharide having a branched chain, including a monosaccharide such as xylose, mannose, arabinose, galactose, glucuronic acid and galacturonic acid. Hemicellulose is polysaccharide that has a lower molecular weight and is amorphous as compared with cellulose. Known examples of the representative hemicellulose include polysaccharide such as xylan, arabinoxylan, mannan, glucomannan and glucuronoxylan.

Namely, the present invention provides basically the separator including the dissolving pulp, as a separator used for being interposed between a cathode and a anode of an alkaline battery to thereby isolate the active material of both electrodes, in order to solve the above subject. The separator includes 20 - 90 mass% a cellulose fiber and the remainder is an alkali- resistance synthetic fiber. In addition, as the cellulose fiber, the separator includes the dissolving pulp.

Furthermore, there is provided a separator for an alkaline battery including the dissolving pulp and a regenerated cellulose fiber. Moreover, there is provided a separator for an alkaline battery in which the regenerated cellulose fiber is a Lyocell fiber. In addition, there is provided an alkaline battery provided with the separator for an alkaline battery including the cellulose fiber.

[Embodiment]

Hereinafter, the embodiment of the present invention will be explained.

(Dissolving pulp)

In the separator for an alkaline battery of the present embodiment, the dissolving pulp is included. The dissolving pulp is a bleached chemical pulp with high purity.

A usual pulp for papermaking has a low content ratio of $\alpha$-cellulose and is poor in alkali resistance, and is not suitable for a separator for an alkaline battery. In addition, the mercerized pulp that has been conventionally used for the separator for an alkaline battery has a high content ratio of $\alpha$-cellulose and is excellent in alkali resistance. However, since the mercerized pulp is a pulp obtained by only mercerizing a pulp for papermaking, hemicellulose hardly soluble in an alkaline solution remains and the gas generation amount caused by the corrosion of the anode is large. Therefore, the mercerized pulp is not preferable as a cellulose fiber for use in the separator for an alkaline battery.

A soluble pulp with high purity, in which the content of hemicellulose is small and the content ratio of $\alpha$-cellulose is 92% or more, is suitable for the separator of the present embodiment.

The dissolving pulp to be blended with the separator for an alkaline battery of the present embodiment is different, in the manufacturing method and manufacturing process, from a general pulp for papermaking, which is digested by adding a chemical solution such as $Na_2S$ and NaOH to wood or non-wood chips. In the dissolving pulp used for the separator of the present embodiment, wood or non-wood chips are subjected to steam treatment with vapor of high temperature before the digestion, and hemicellulose included in the chip is hydrolyzed under acidic circumstances. Then, after the steaming treatment, the dissolving pulp is digested to be made into a pulp. Furthermore, the pulp after the digestion is treated with an alkaline solution such as about 2 - 10 mass% sodium hydroxide, and hemicellulose remaining in the pulp is extracted and removed.

As a method for digesting the dissolving pulp, a sulfite method, a sulfate method, or an alkaline method can be utilized. Meanwhile, when the digestion method is the sulfite method, an acidic, or a neutral to alkaline sulfite digestion method can be utilized. In particular, in the acidic sulfite digestion, acidity is expressed in the digestion, which unnecessitates the steaming treatment under an acidic circumstance before the digestion, and thus, is preferable. Furthermore, among these digestion methods, the sulfate method gives a dissolving pulp having a little hemicelluloses, and with high purity and a high content ratio of $\alpha$-cellulose. Therefore, the dissolving pulp according to the sulfate method is particularly preferable.

Meanwhile, as to the dissolving pulp, the kind and standard are defined in JIS P 2701, and for the separator of the present embodiment, a dissolving pulp having a little hemicellulose and a large content ratio of $\alpha$-cellulose is particularly preferable among dissolving pulps of the sulfite method pulp and the sulfate method pulp, defined in JIS P 2701.

In the separator of the present embodiment, by blending the dissolving pulp, there can be realized an alkaline battery capable of sufficiently decreasing the corrosion of zinc alloy powder of the anode.

(Crystalline structure)

The crystalline structure of the dissolving pulp to be blended with the separator of the present embodiment preferably has the crystalline structure of cellulose II. By having the crystalline structure of cellulose II, the dimensional shrinkage of the separator can be made small.

Most of commercially available dissolving pulps are a pulp of the crystalline structure of cellulose I. When a large amount of a pulp having the crystalline structure of cellulose I is included, the dimensional shrinkage of the separator in the alkaline electrolytic solution becomes large. Therefore, when the content ratio of the dissolving pulp in the separator is set to be a high content ratio of 70 mass% or more, the use of a dissolving pulp having the crystalline structure of cellulose II is preferable.

The dissolving pulp having the crystalline structure of cellulose II is obtained by subjecting the dissolving pulp having the crystalline structure of cellulose I to an alkaline treatment with an sodium hydroxide solution having a concentration of 10 mass% - 18 mass%. A part or the whole of the crystalline structure of cellulose I is converted to the crystalline structure of cellulose II, by the treatment. Therefore, there is obtained the dissolving pulp that shrinks a little in the alkaline electrolytic solution and generates a small amount of gas by the corrosion of the anode.

Meanwhile, since hemicellulose has been removed from the dissolving pulp, an amorphous portion in the pulp is decreased. Therefore, the permeation of the alkaline electrolytic solution into the fiber of the dissolving pulp is suppressed. Accordingly, in the dissolving pulp, the swelling of the fiber is decreased.

As the result, even when the dissolving pulp has only the crystalline structure of cellulose I, the dimensional shrinkage in the electrolytic solution is remarkably small as compared with a general pulp for papermaking. Furthermore, the separator including a dissolving pulp in which crystalline structures of cellulose I and cellulose II coexist can reduce a dimensional shrinkage rate to the same level as that of a conventional separator using the mercerized pulp.

Meanwhile, a dissolving pulp having the crystalline structure of cellulose I alone tends to shrink largely in the alkaline electrolytic solution. However, by blending a synthetic fiber that exhibits a small dimensional change in the alkaline electrolytic solution, such as a vinylon fiber in an amount of 30 mass% or more relative to the separator mass, the dimensional shrinkage of the separator in the electrolytic solution can be suppressed to 2.0% or less, which causes no practical problem. Consequently, even a dissolving pulp having the crystalline structure of cellulose I alone would be able to be applied sufficiently to the separator of the present embodiment.

(Types of material)

As the dissolving pulp to be blended with the separator of the present embodiment, there can be used a dissolving pulp obtained from wood of a softwood or a hardwood, and a dissolving pulp obtained from a non-wood material.

There can be used, as the softwood, a dissolving pulp obtained from Pinus radiata, slash pine, southern pine, spruce, Douglas fir, hemlock or the like. There can be used, as the hardwood, a dissolving pulp obtained from beech, Japanese oak, birch, eucalyptus, oak, poplar, alder or the like.

The dissolving pulp obtained from the softwood has an average fiber length as long as about 2 mm and refining treatment is comparatively easy, and thus the pulp is suitable for the refining as high as 100 ml or less of a CSF value. Therefore, the pulp is particularly suitable for obtaining a separator having high air permeability and is excellent in shielding characteristics for a dendrite.

On the other hand, a dissolving pulp obtained from the hardwood has an average fiber length of about 0.7 mm, and is not suitable for high refining of 100 ml or less of a CSF value. However, the average fiber diameter of the dissolving pulp is as thin as about 15 $\mu$m, and even a slight refining would give a homogeneous separator.

Furthermore, there can be used, as the dissolving pulp of a non-wood material, a dissolving pulp obtained from a seed fiber such as cotton, linter and kapok, a vein fiber such as Manila hemp and sisal hemp, a bast fiber such as flax, jute, kenaf and hemp, the plants of Graminaceae such as bamboo, esparto and bagasse, and a fruit fiber such as coco. The non-wood pulp has a fiber diameter as thin as about 10 $\mu$m as compared with a wood pulp, and there is a pulp having a fiber length as long as about 3 to 7 mm. Therefore, there can be obtained a separator having a low density and a low electric resistance as compared with a wood dissolving pulp, and is dense and excellent in shielding characteristics, through the use of a non-wood dissolving pulp.

Meanwhile, conventionally, a pulp having a high content ratio of $\alpha$-cellulose such as the mercerized pulp has been known to be suitable as the cellulose fiber to be blended with the separator for an alkaline battery.

The reason why the pulp having a high content ratio of $\alpha$-cellulose is suitable is based on the findings and speculations that a pulp with higher purity has a smaller amount of soluble component in the alkaline electrolytic solution, exhibits a smaller solubility in the electrolytic solution and smaller dimensional change in the electrolytic solution and is excellent in alkali resistance.

On the other hand, the influence on the corrosion of zinc alloy powder of the alkaline battery by the pulp or the regenerated cellulose fiber in the separator has not been known up to the present time.

(Regenerated cellulose fiber)

As a cellulose fiber to be blended with the separator of the present embodiment, a regenerated cellulose fiber can also be blended in addition to the dissolving pulp. By adding the regenerated cellulose fiber as a cellulose fiber, the density of the separator becomes lower, and the electrolytic solution -holding amount of the separator increases. Consequently, since the electric resistance of the separator is reduced and the solution -holding amount increases, the heavy load-discharge characteristics of the alkaline battery can be improved.

On the other hand, when a cellulose fiber to be blended with the separator is set to be the dissolving pulp alone, it becomes possible to produce a thin separator excellent in the shielding characteristics between both electrodes. Since the amount of the active material in the battery can be increased by making the separator thin, the capacity of the battery can be increased.

As the regenerated cellulose fiber to be blended with the separator of the present embodiment, there can be utilized a rayon fiber, a modal fiber, a polynosic fiber, a cupra fiber, a Lyocell fiber and the like. As to the fiber diameter of the regenerated cellulose fiber to be used, fineness of, for example, 0.5 dtex. - 3.3 dtex. is preferable, and the fiber length of 2 mm to 7 mm is preferable.

Among these regenerated cellulose fibers, the polynosic fiber, the cupra fiber and the Lyocell fiber can be fibrillated by refining treatment.

When the regenerated cellulose fiber that can be fibrillated is to be blended as a cellulose fiber, the cellulose fiber is fibrillated by subjecting the dissolving pulp and the regenerated cellulose fiber to refining treatment depending on the degree of shielding characteristics required for the separator. Furthermore, by paper-making the separator after blending the synthetic fiber with the dissolving pulp and the regenerated cellulose fiber, the shielding characteristics necessary for the separator can be imparted. Meanwhile, it is also possible to subject either the dissolving pulp or the regenerated cellulose fiber to refining treatment and to use the same for the separator, in order to adjust physical properties of the separator.

When the dissolving pulp and the regenerated cellulose fiber are to be subjected to refining, the refining in a mixed state makes it possible to mix sufficiently even fibrils. When paper-making a sufficiently mixed raw material, a homogeneous separator is obtained, which is particularly preferable. Meanwhile, it is also possible to mix the dissolving pulp and the cellulose fiber after refining each of them independently.

It should be noted that the polymerization degree of cellulose of the regenerated cellulose fiber is as low as about 300 to 500. Therefore, the regenerated cellulose fiber dissolves easily in the alkaline electrolytic solution and is poor in alkali resistance, as compared with the dissolving pulp of the present embodiment.

(Blending ratio)

The content ratio of the cellulose fiber in the separator of the present embodiment is preferably in the range of 20 mass% - 90 mass%. When the content ratio of the cellulose fiber in the separator is less than 20 mass%, the electrolytic solution -holding rate of the separator is reduced and the general discharge performance of the battery, in particular, heavy-load discharge characteristics are reduced.

On the other hand, when the content ratio of the cellulose fiber in the separator is large, the amount of the alkali-resistance synthetic fiber in the separator inevitably decreases. Therefore, the dimensional shrinkage of the separator in the electrolytic solution becomes large and the wet strength of the separator is reduced. As the result, the separator is damaged easily and the internal short circuit of the battery is generated easily. Therefore, the content ratio of the cellulose fiber in the separator is preferably set to be 90 mass% or less.

Furthermore, when the dissolving pulp and the regenerated cellulose fiber are used as the cellulose fiber of the separator, it is sufficient that the dissolving pulp and the regenerated cellulose fiber are included in an amount of 20 mass% or more in total. Meanwhile, when the regenerated cellulose fiber is included in an amount of more than 60 mass%, the solution -holding rate of the separator becomes too large. Consequently, in a compact alkaline manganese battery of the AA or AAA size in particular, the separator swells by the electrolytic solution and the volume of the separator occupying the inside of the battery becomes large. In this case, since it becomes necessary to decrease the amount of the active material of the battery, the enhancement of battery performance is difficult.

(Alkali- resistance synthetic fiber)

As the alkali- resistance synthetic fiber to be blended with the separator, a material that does not generate dissolution and shrinkage in the electrolytic solution is selected. For example, in addition to polyvinyl alcohol-based fibers such as a vinylon fiber and a polyvinyl alcohol fiber, polyamide fibers such as a nylon-6 fiber and a nylon-6,6 fiber, and polyolefine fibers such as a polypropylene fiber, a polyethylene fiber, a polypropylene (core)/polyethylene (sheath)complex fiber and a polyethylene synthetic pulp are preferable. In addition, as to the fiber diameter of the synthetic fiber, fineness of 0.1 dtex. - 3.3 dtex. is preferable, and a fiber having a fiber length of 2 mm - 7 mm is preferable.

Among these alkali- resistance synthetic fibers, in particular, the vinylon fiber is preferable. The vinylon fiber is a polyvinyl alcohol fiber obtained by causing a polyvinyl alcohol fiber obtained by spinning to react with formaldehyde or the like and carrying out acetalization. The vinylon fiber dissolves scarcely in the alkaline electrolytic solution and exhibits scarcely the dimensional change in the electrolytic solution. Therefore, when the vinylon fiber is blended with the separator, the dimensional shrinkage of the separator in the electrolytic solution can be made small.

The polyvinyl alcohol fiber is a fiber obtained by performing spinning from a polyvinyl alcohol resin solution. In the case of the polyvinyl alcohol fiber, a dissolution temperature in water can be raised from about 60°C to 100°C or more by heating drawing.

Meanwhile, for the separator for an alkaline battery, an easily-soluble polyvinyl alcohol fiber having a dissolution temperature of 60°C - 90°C in water is conventionally used as a binder for binding the cellulose fiber and the synthetic fiber blended with the separator. The alkali-resistance synthetic fiber of the present embodiment also includes the easily-soluble polyvinyl alcohol fiber used as the binder.

When the easily-soluble polyvinyl alcohol fiber is used for the separator as the binder, the content ratio of the easily-soluble polyvinyl alcohol fiber in the separator is preferably in the range of 5 - 20 mass%.

Furthermore, the content ratio of the easily-soluble polyvinyl alcohol fiber is more preferably set so that the wet strength of the separator is in the range of 5N/15mm - 20N/15mm, irrespective of the content ratio range of 5 - 20 mass%. When the wet strength is less than 5N/15mm, the separator is broken easily, and the battery generates easily an internal short circuit due to the shock in transportation or falling of the alkaline battery. On the other hand, in a separator having a wet strength of more than 20N/15mm, a binder effect is too large and, therefore, swelling of the separator in the electrolytic solution is suppressed. Consequently, due to the reduction in the solution-holding rate and the increase in the electric resistance of the separator, heavy-load discharge characteristics of the alkaline battery are reduced easily.

The separator of the present embodiment is paper-made using an ordinary papermaking method by using the above-described material, and by using an inclined wire former machine, a cylinder paper machine, a Fourdrinier paper machine or the like. In addition, by using a combination papermaking machine in which respective papermaking nets of these papermaking machines are combined, it is also possible to manufacture a separator in which paper layers having different fiber blending, density or denseness are stacked. Furthermore, even when the same papermaking raw material is used, the formation of a stacked separator using a combination papermaking machine having a plurality of papermaking net portions makes a pore smaller than that of a single layer separator, to thereby give a separator that hardly generates the internal short circuit of the battery caused by a dendrite.

Meanwhile, the refining treatment of the cellulose fiber such as the dissolving pulp and Lyocell fiber used for the separator of the present embodiment can be carried out using various refiners such as a disk refiner, a refiner or a high-speed disintegrator.

Examples

Hereinafter, specific examples of the separator for an alkaline battery and the alkaline battery using the separator according to the present invention will be explained. Meanwhile, the present invention is not limited to contents described in these Examples.

[Gas generation amount test of dissolving pulp]

First, prior to specific Examples, characteristics of the dissolving pulp used for the separator for an alkaline battery will be explained while making a comparison between those of the mercerized pulp and a pulp for papermaking conventionally used.

In Table 1, types of pulp materials and measurement results of content ratio of the $\alpha$-cellulose, crystalline structure, area shrinkage rate and gas generation amount are shown as to chemical pulps such as the dissolving pulp and mercerized pulp used in Examples and Comparative Examples.

[Table 1]

| PULP | | | | CONTENT RATIO OF $\alpha$-CELLULOSE | CRYSTALLINE STRUCTURE | AREA SHRINKAGE RATE | GAS GENERATION AMOUNT |
|---|---|---|---|---|---|---|---|
| MARK | TYPE OF MATERIAL | TYPE | | (%) | | (%) | $\mu$l/g |
| A | WOOD | SOLUBLE PULP FROM SOFTWOOD | DKP | 97.4 | I | 12.3 | 118 |
| B | WOOD | SOLUBLE PULP FROM SOFTWOOD | DKP | 96.0 | I | 12.8 | 128 |
| C | WOOD | SOLUBLE PULP FROM SOFTWOOD | DKP | 94.7 | I | 13.2 | 137 |
| D | WOOD | SOLUBLE PULP FROM SOFTWOOD | DSP | 92.2 | I | 13.3 | 145 |
| E | WOOD | SOLUBLE PULP FROM HARDWOOD | DKP | 97.6 | I | 13.0 | 118 |
| F | WOOD | SOLUBLE PULP FROM SOFTWOOD | DKP | 98.1 | I + II | 3.2 | 114 |
| G | WOOD | SOLUBLE PULP FROM SOFTWOOD | DKP | 98.5 | II | 2.8 | 112 |
| H | WOOD | SOLUBLE PULP FROM HARDWOOD | DKP | 98.3 | II | 2.8 | 113 |
| I | NON-WOOD MATERIAL | SOLUBLE PULP FROM COTTON LINTER | DAP | 99.2 | I | 14.5 | 108 |
| J | NON-WOOD MATERIAL | SOLUBLE PULP FROM SISAL HEMP | DAP | 93.6 | I | 13.3 | 138 |
| K | NON-WOOD MATERIAL | SOLUBLE PULP FROM KENAF | DAP | 92.1 | I | 13.5 | 145 |
| L | NON-WOOD MATERIAL | SOLUBLE PULP FROM BAMBOO | DKP | 93.0 | I | 10.8 | 140 |
| M | WOOD | MERCERIZED SOFTWOOD PULP | | 97.5 | II | 3.0 | 190 |

EP 2 811 544 A1

(continued)

| | PULP | | | CONTENT RATIO OF $\alpha$-CELLULOSE | CRYSTALLINE STRUCTURE | AREA SHRINKAGE RATE | GAS GENERATION AMOUNT |
|---|---|---|---|---|---|---|---|
| MARK | TYPE OF MATERIAL | TYPE | | (%) | | (%) | $\mu$l/g |
| N | NON-WOOD MATERIAL | MERCERIZED JUTE PULP | | 97.0 | II | 3.2 | 180 |
| O | WOOD | PULP FOR PAPERMAKING | NBKP | 88.1 | I | 22.4 | 300 |

Meanwhile, measured values of the respective pulps described in Table 1 were obtained according to the following methods

(1) Content ratio of α-cellulose

The content ratio of α-cellulose was measured according to the measuring method of "Alpha-, Beta- and Gamma-Cellulose in Pulp" defined in the TAPPI (Technical Association of the Pulp and Paper Industry)standard method T203.

(2) Crystalline structure

A pulp sheet was fixed to a sample holder of an X-ray diffraction apparatus and an X-ray diffraction pattern was measured using an X-ray tube of a Cu target. From the measured X-ray diffraction pattern, diffraction peaks belonging to cellulose I or cellulose II were checked, and the crystalline structure of the pulp was determined to be cellulose I, cellulose II or a mixture thereof (I + II).

(3) Area shrinkage rate

For measuring the area shrinkage rate of the pulp, an easily soluble polyvinyl alcohol fiber with a mass ratio of 10% (dissolution temperature of 70°C) was blended with a sample, and a handmade sheet having a basis weight of 30 g/m$^2$ was produced. The sheet was cut out in a constant dimension (100 mm x 100 mm) and the area was measured. Subsequently, the sheet was immersed in a 40% KOH solution at 70°C for 8 hours, the area of the sample piece after the immersion was measured in the state where the piece was wet with the KOH solution, and the area shrinkage rate was obtained according to a formula below.

$$\texttt{Area shrinkage rate (\%) = \{(A1 - A2)/A1\} × 100}$$

A1 = area before immersion
A2 = area after immersion

(4) Hydrogen gas generation amount

A pulp and a KOH electrolytic solution (which dissolves zinc oxide) were added to a commercially available zinc alloy powder for an alkaline manganese battery anode to which aluminum (Al), bismuth (Bi) and indium (In) had been added, which was left to stand at 70°C for 10 days and the amount of generated hydrogen gas (volume μl of generated hydrogen gas per 1 g of zinc) was measured. Meanwhile, in the measurement of respective pulps, a constant amount of zinc alloy powder:pulp:KOH electrolytic solution was taken out at a mass ratio of 1:0.05:1, and the gas generation amount was measured using an apparatus similar to one disclosed in Fig. 2 of Japanese Patent Laid-Open No. 2008-171767.

In Table 1, pulp A to pulp E are commercially available dissolving pulps obtained from wood.

Pulp F and pulp G are pulps obtained by subjecting pulp A being a dissolving pulp from a softwood to an alkaline treatment with 12 mass% and 17.5 mass% of NaOH solutions, respectively. Similarly, pulp H is a pulp obtained by subjecting pulp E being a dissolving pulp from a hardwood to an alkaline treatment with a NaOH solution of 17.5 mass% in concentration.

Pulps A, B and C are dissolving pulps (DKP) based on a sulfate method for a softwood, obtained from southern pine, Pinus radiata and slash pine, respectively, and pulp D is a dissolving pulp (DSP) based on an acidic sulfite method for a softwood, obtained from Pinus radiata. Pulp E is a dissolving pulp (DKP) from a hardwood obtained from a eucalyptus.

Pulps I to L are dissolving pulps obtained from non-wood material. Pulp I is a dissolving pulp (DAP) from cotton linter by an alkaline method. Pulp J is a dissolving pulp (DAP) from sisal hemp by an alkaline method. Pulp K is a dissolving pulp (DAP) from kenaf by an alkaline method. Pulp L is a dissolving pulp (DKP) from bamboo by a sulfate method.

Pulp M is a Porosanier pulp of Rayonier Inc. in USA, which is a mercerized pulp of a softwood pulp of southern pine.

Pulp N is a mercerized pulp obtained by treating a jute pulp for papermaking being a non-wood material with 20 mass% of a NaOH solution. Pulp O is a softwood pulp (NBKP) for papermaking mainly composed of spruce.

From Table 1, it is known that pulp O being a pulp for papermaking has a content ratio of α-cellulose as low as 88.1%, exhibits a gas generation amount as large as 300 μl/g and furthermore, area shrinkage is large, and thus, is not suitable for the cellulose fiber for the alkaline battery separator.

Pulp M that is a commercially available mercerized pulp has a content ratio of α-cellulose as high as 97.5% and exhibits an area shrinkage rate as small as 3.0%, and thus, is excellent in alkali resistance. However, it is known that the gas generation amount is as large as 190 μl/g.

Similarly, pulp N obtained by mercerizing a jute pulp also has a content ratio of α-cellulose as high as 97.0% and shows an area shrinkage rate as small as 3.2%, but exhibits a gas generation amount as large as 180 μl/g. This is because pulp M and pulp N are formed of a pulp having been digested by an ordinary method as a pulp for papermaking. That is, it is considered that hemicellulose included in wood or non-wood material remains in a large amount even when a mercerized treatment is carried out, to thereby make the gas generation amount large.

On the other hand, pulps A to E are wood dissolving pulps from a softwood or a hardwood. The content ratio of α-cellulose is in the range of 97.6 of pulp E to 92.2% of pulp D. As to the gas generation amount of these dissolving pulps, pulps A and E show 118 μl/g. Furthermore, pulp D having a content ratio of α-cellulose of 92.2% shows 145 μl/g. In this way, along with the reduction in the content ratio of α-cellulose, hemicellulose included in a dissolving pulp increased and, therefore, the gas generation amount increased.

Pulp F and pulp G are pulps obtained by treating pulp A being a dissolving pulp from a softwood with 12 mass% and 17.5 mass% NaOH solutions, respectively. The area shrinkage rate of pulp A is 12.3%, but in contrast, the shrinkage rate of pulp F is 3.2% and the shrinkage rate of pulp G is 2.8%, which is smaller than 12.3%. Pulp H is a pulp obtained by treating pulp E being a dissolving pulp from a hardwood with a 17.5 mass% NaOH solution. By the treatment, the area shrinkage rate decreased from 13.0% of pulp E to 2.8% of pulp H. Accordingly, it is known that the shrinkage in the alkaline electrolytic solution decreases by treating a dissolving pulp with a NaOH solution to thereby change the crystalline structure from cellulose I to cellulose II.

Meanwhile, the hemicellulose content in the dissolving pulp can be decreased furthermore by subjecting the dissolving pulp to an alkaline treatment, and the gas generation amount can be decreased furthermore. For example, the content ratio of α-cellulose of pulp A is 97.4%, but in contrast, the content ratio of α-cellulose of pulp F is 98.1% and the content ratio of α-cellulose of pulp G is 98.5%, which is larger than 97.4%. In the same way, the gas generation amount of pulp A is 118 μl/g, but in contrast, the gas generation amount of pulp F is 114 μl/g and the gas generation amount of pulp G is 112 μl/g, which is smaller than118 μl/g. In this way, pulp F and pulp G obtained by alkali-treating pulp A exhibit a reduced gas generation amount due to the reduction of the hemicellulose content.

The X-ray diffraction pattern was measured for pulp A, pulp F and pulp G.

Pulp A before the treatment exhibited a diffraction pattern of cellulose I.

Pulp F treated with a 12 mass% NaOH solution showed a diffraction pattern of a mixture of cellulose I and cellulose II. Pulp G exhibited nearly an X-ray diffraction pattern of cellulose II.

From the above result, as shown in Table 1, it is known that the area shrinkage rate further decreases by alkali-treating the dissolving pulp having the crystalline structure of cellulose I, with a NaOH solution or the like, to thereby change the crystalline structure of cellulose I into the crystalline structure of cellulose II. As described above, the dimensional shrinkage of the separator in the electrolytic solution can be decreased in addition to the above-described decrease in the gas generation amount, by blending the dissolving pulp having the crystalline structure of cellulose II with the separator.

Pulps I to L are dissolving pulps from non-wood material. Pulp I is a dissolving pulp manufactured by subjecting cotton linter to a steaming treatment with vapor at about 150°C under an acidic circustances, and after that, alkali-digesting the same. Pulp I has a content ratio of α-cellulose as high as 99.2%. Since an ordinary cotton linter pulp has a content ratio of α-cellulose of about 98%, it is presumed that most hemicellulose has not existed in pulp I.

In addition, Pulp J is a dissolving pulp manufactured from sisal hemp and pulp K is a dissolving pulp manufactured from kenaf, by the similar method. Furthermore, pulp L is a bamboo-dissolving pulp manufactured by the same sulfate method as that for the wood dissolving pulp, through the use of bamboo as a raw material.

Meanwhile, although not shown in Table 1, the hydrogen gas generation amount was measured in the same way for arabinoxylan and glucomannan that are hemicellulose materials, in addition to the above-described chemical pulps. However, the hydrogen gas generation amount of these hemicellulose materials became 50 times or more the amount of the above-described dissolving pulps, which makes the measurement difficult because the gas generation amount was too large. From the result, it is considered that hemicellulose included in a pulp increases the corrosion of the zinc alloy powder.

[Physical properties of separator and gas generation amount test]

Next, while using each of pulps A to N described in Table 1 as the cellulose fiber to be blended with the alkaline battery separator, alkaline battery separators in Examples and Comparative Examples shown below were produced. Meanwhile, pulp O is an ordinary pulp for papermaking and is not suitable for the separator for an alkaline battery, because it is extremely poor in an alkali resistance and has an abnormally large gas generation amount. Therefore, a separator using pulp O was not produced.

(Example 1)

50 mass% pulp G (pulp obtained by alkali-treating a dissolving pulp A formed from a softwood, content ratio of $\alpha$-cellulose of 98.5%) described in Table 1 was subjected to refining treatment so as to be 350 ml of a CSF value. There were mixed, with the refined pulp, 40 mass% of a vinylon fiber (fineness of 0.6 dtex., fiber length of 3 mm: FFN fiber manufactured by Unitika Ltd.) and 10 mass% polyvinyl alcohol fiber (fineness of 1.1 dtex., fiber length of 3 mm: SML fiber manufactured by Unitika Ltd.). Papermaking of the mixed raw material with an inclined wire former machine gave a separator having a thickness of 96.5 $\mu$m, a basis weight of 33.4 g/m$^2$ and a density of 0.346 g/cm$^3$.

(Example 2)

The same procedure as in Example 1 gave a separator having a thickness of 95.3 $\mu$m, a basis weight of 32.9 g/m$^2$ and a density of 0.345 g/cm$^3$, except for changing pulp G to pulp F (pulp obtained by alkali-treating dissolving pulp A, content ratio of $\alpha$-cellulose of 98.1%).

(Example 3)

The same procedure as in Example 1 gave a separator having a thickness of 91. 0 $\mu$m, a basis weight of 33.0 g/m$^2$ and a density of 0.363 g/cm$^3$, except for changing pulp G to pulp B (dissolving pulp from softwood, content ratio of $\alpha$-cellulose of 96.0%).

(Example 4)

The same procedure as in Example 1 gave a separator having a thickness of 90.1 $\mu$m, a basis weight of 33.2 g/m$^2$ and a density of 0.368 g/cm$^3$, except for changing pulp G to pulp C (dissolving pulp from a softwood, content ratio of $\alpha$-cellulose of 94.7%).

(Example 5)

The same procedure as in Example 1 gave a separator having a thickness of 89.8 $\mu$m, a basis weight of 33.1 g/m$^2$ and a density of 0.369 g/cm$^3$, except for changing pulp G to pulp D (dissolving pulp from softwood, content ratio of $\alpha$-cellulose of 92.2%).

(Comparative Example 1)

The same procedure as in Example 1 gave a separator having a thickness of 87.3 $\mu$m, a basis weight of 32.9 g/m$^2$ and a density of 0.377 g/cm$^3$, except for changing pulp G to pulp M (commercially available mercerized pulp from softwood, content ratio of $\alpha$-cellulose of 97.5%).

(Example 6)

20 mass% pulp E (dissolving pulp from hardwood, content ratio of $\alpha$-cellulose of 97.6%) was subjected to refining treatment so as to be 500 ml of a CSF value. There were mixed, with the refined pulp, 70 mass% of a vinylon fiber (fineness of 0.6 dtex. , fiber length of 3 mm: FFN fiber manufactured by Unitika Ltd.) and 10 mass% a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 100.7 $\mu$m, a basis weight of 33.1 g/m$^2$ and a density of 0.329 g/cm$^3$.

(Example 7)

The same procedure as in Example 6 gave a separator having a thickness of 93.2 $\mu$m, a basis weight of 33.2 g/m$^2$ and a density of 0.356 g/cm$^3$, except for setting pulp E to be 70 mass% and the vinylon fiber to be 20 mass%.

(Example 8)

90 mass% pulp H (pulp obtained by alkali-treating dissolving pulp E, content ratio of $\alpha$-cellulose of 98.3%) was subj ected to ref ining treatment so as to be 500 ml of a CSF value. There were mixed, with the refined pulp, 5 mass% of a vinylon fiber (fineness of 0.6 dtex., fiber length of 3 mm: FFN fiber manufactured by Unitika Ltd.) and 5 mass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 84.6 $\mu$m, a basis weight of 32.5 g/m$^2$ and a density of 0.384 g/cm$^3$.

(Comparative Example 2)

The same procedure as in Example 6 gave a separator having a thickness of 111.4 $\mu$m, a basis weight of 33.4 g/m$^2$ and a density of 0.300 g/cm$^3$, except for setting pulp E to be 15 mass% and the vinylon fiber to be 75 mass%.

(Comparative Example 3)

97 mass% pulp H was subjected to refining treatment so as to be 500 ml of a CSF value, with which there was mixed 3 mass% of a polyvinyl alcohol fiber (fineness of 1.1 dtex. , fiber length of 3 mm: SML fiber manufactured by Unitika Ltd.). Papermaking of the mixed raw material with a cylinder paper machine gave a separator having a thickness of 82.5 $\mu$m, a basis weight of 32.8 g/m$^2$ and a density of 0.398 g/cm$^3$.

(Example 9)

After mixing 10 mass% of pulp A (dissolving pulp from softwood, content ratio of $\alpha$-cellulose of 97.4%) and 10 mass% of the Lyocell fiber (fineness of 1.7 dtex., fiber length of 3 mm: TENCEL fiber by Lenzing Fibers Limited), the mixture was subj ected to refining treatment so as to be 350 ml of a CSF value. There were mixed, with the refined raw material, 70 mass% of a vinylon fiber (fineness of 0.6 dtex., fiber length of 3 mm: FFN fiber manufactured by Unitika Ltd.) and 10 mass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 105.4 $\mu$m, a basis weight of 33.6 g/m$^2$ and a density of 0.319 g/cm$^3$.

(Example 10)

The same procedure as in Example 9 gave a separator having a thickness of 100.2 $\mu$m, a basis weight of 32.9 g/m$^2$ and a density of 0.328 g/cm$^3$, except for setting pulp A to be 30 mass%, the Lyocell fiber to be 20 mass% and the vinylon fiber to be 40 mass%.

(Example 11)

The same procedure as in Example 9 gave a separator having a thickness of 99.8 $\mu$m, a basis weight of 33.0 g/m$^2$ and a density of 0.331 g/cm$^3$, except for setting pulp A to be 30 mass%, the Lyocell fiber to be 40 mass% and the vinylon fiber to be 20 mass%.

(Comparative Example 4)

The same procedure as in Example 10 gave a separator having a thickness of 93.6 $\mu$m, a basis weight of 33.2 g/m$^2$ and a density of 0.355 g/cm$^3$, except for changing pulp A to pulp M.

(Example 12)

There were mixed 30 mass% of pulp E, 30 mass% of a rayon fiber (fineness of 1.1 dtex. , fiber length of 4 mm), 10 mass% of a polyethylene/polypropylene bicomponent fiber (fineness of 2.2 dtex., fiber length of 5 mm: NBF (H) fiber manufactured by Daiwabo Polytec Co. , Ltd), 20 mass% of a vinylon fiber (fineness of 1.1 dtex., fiber length of 3 mm: FGN fiber manufactured by Unitika Ltd.) and 10 mass% of a polyvinyl alcohol fiber (fineness of 1.1 dtex., fiber length of 3 mm: SMM fiber manufactured by Unitika Ltd.). Papermaking of the mixed raw material with an inclined wire former machine gave a separator having a thickness of 321. 0 $\mu$m, a basis weight of 71.5 g/m$^2$ and a density of 0.223 g/cm$^3$.
Meanwhile, pulp E was used without refining, which had a CSF value of 730 ml. Since the separator in Example 12 has a large thickness and a large basis weight, it is a separator suitable for use in alkaline manganese batteries of a large size such as the D or C size.

(Example 13)

75 mass% of pulp F was subjected to refining treatment so as to be 0 ml of a CSF value. There were mixed, with the refined raw material, 5 mass% of a polyethylene synthetic pulp (SWP EST-8 manufactured by Mitsui Chemicals, Inc.) and 20 mass% of a polyvinyl alcohol fiber (fineness of 1.1 dtex., fiber length of 2 mm: AH fiber manufactured by Unitika Ltd.). Papermaking of the mixed raw material with a Fourdrinier paper machine gave a separator having a thickness of 55.2 $\mu$m, a basis weight of 32.2 g/m$^2$ and a density of 0.583 g/cm$^3$.

(Example 14)

30 mass% of the Lyocell fiber (fineness of 1. 7 dtex. , fiber length of 3 mm: TENCEL fiber of Lenzing Fibers Limited) was subjected to refining treatment so as to be 0 ml of a CSF value. With the refined raw material, there were mixed 30 mass% of unrefined pulp E, 3 0 mass% of a vinylon fiber (fineness of 0.6 dtex. , fiber length of 3 mm: FFN fiber manufactured by Unitika Ltd.) and 10 mass% of a polyvinyl alcohol fiber (fineness of 1.1 dtex., fiber length of 3 mm: SML fiber manufactured by Unitika Ltd.). Papermaking of the mixed raw material with a cylinder- inclined wire former combination paper machine gave a separator formed of two stacked layers and having a thickness of 85.4 $\mu$m, a basis weight of 31.2 g/m$^2$ and a density of 0.365 g/cm$^3$.

(Example 15)

40 mass% of pulp I (dissolving pulp from cotton linter being non-wood material) was subjected to refinig treatment so as to be 200 ml of a CSF value, with which there were mixed 20 mass% of a rayon fiber (fineness of 1.1 dtex., fiber length of 3 mm), 30 mass% of a vinylon fiber (fineness of 0.6 dtex. , fiber length of 2 mm: FFN fiber manufactured by Unitika Ltd.) and 10 mass% of a polyvinyl alcohol fiber (fineness of 1.1 dtex. , fiber length of 3 mm: SML fiber manufactured by Unitika Ltd.). Papermaking of the mixed raw material with a cylinder paper machine gave a separator having a thickness of 103.5 $\mu$m, a basis weight of 33.2 g/m$^2$ and a density of 0.321 g/cm$^3$.

(Example 16)

40 mass% of pulp J (dissolving pulp from sisal hemp being non-wood material) was subjected to refining treatment so as to be 400 ml of a CSF value, with which there were mixed 50 mass% of a vinylon fiber (fineness of 0.6 dtex., fiber length of 2 mm: FFN fiber manufactured by Unitika Ltd.) and 10 mass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 102.6 $\mu$m, a basis weight of 33.5 g/m$^2$ and a density of 0.327 g/cm$^3$.

(Example 17)

40 mass% of pulp K (dissolving pulp from kenaf being non-wood material) was subjected to refining treatment so as to be 300 ml of a CSF value, with which there were mixed 50 mass% of a vinylon fiber (fineness of 0.6 dtex., fiber length of 2 mm: FFN fiber manufactured by Unitika Ltd.) and 10 mass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 96.8 $\mu$m, a basis weight of 32.6 g/m$^2$ and a density of 0.337 g/cm$^3$.

(Example 18)

30 mass% of pulp L (dissolving pulp from bamboo being non-wood material) was subjected to refinig treatment so as to be 180 ml of a CSF value, with which there were mixed 40 mass% of a vinylon fiber (fineness of 0.6 dtex., fiber length of 2 mm: FFN fiber manufactured by Unitika Ltd.), 20 mass% of an unrefined Lyocell fiber (fineness of 1.7 dtex., fiber length of 3 mm: TENCEL fiber of Lenzing Fibers Limited) and 10m ass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 110.0 $\mu$m, a basis weight of 32.8 g/m$^2$ and a density of 0.298 g/cm$^3$.

(Comparative Example 5)

40 mass% of pulp N (mercerized jute pulp) was subjected to refining treatment so as to be 300 ml of a CSF value, with which there were mixed 50 mass% of a vinylon fiber (fineness of 0.6 dtex., fiber length of 2 mm: FFN fiber manufactured by Unitika Ltd.) and 10 mass% of a polyvinyl alcohol fiber (fineness of 1.1 dtex., fiber length of 3 mm: SML fiber manufactured by Unitika Ltd.). Papermaking of the mixed raw material with a cylinder paper machine gave a separator having a thickness of 97. 5 $\mu$m, a basis weight of 32.4 g/m$^2$ and a density of 0.332 g/cm$^3$.

Various measured data of separators according to Example 1 to Example 18 and Comparative Example 1 to Comparative Example 5 are shown in Table 2.

Each of various measured values of separators according to each of Examples and Comparative Examples was obtained by each of following methods.

(1) CSF (Canadian Standard Freeness): measured by the method of Canadian Standard defined in JIS P 8121

(2) Thickness

Two separators were piled up, the thickness thereof was measured with a dial thickness gauge at regular intervals, a half thereof was obtained as a thickness per one separator, and furthermore, the average value based on measured points was defined as the thickness of the separator.

(3) Basis weight

The area and mass of the separator were measured, and the mass (g) per the separator (m$^2$) was obtained.

(4) Wet strength

A sample piece of 15 mm in width was cut out from the separator in the vertical direction and the sample piece was immersed in a 40% KOH solution. After that, an excessive 40% KOH solution adhering to the test piece was absorbed with filter paper. The tensile strength of the test piece wetted with the 40% KOH solution was measured in accordance with the method defined in JIS P 8113, and the measured tensile strength was defined as the wet strength of the separator.

(5) Holding ration

The separator was cut out in a square of 50 mm x 50 mm, the mass of the square after drying was measured, and after that, the separator cut out was immersed in a 40% KOH solution for 10 minutes. The test piece was stuck as it was onto a glass plate inclined at an angle of 45° and was fixed for 3 minutes, the test piece was removed by causing an excessive 40% KOH solution to flow down, the mass of the test piece holding the solution was measured as it was, and the holding ration was calculated according to a formula below.

$$\text{Holding ration (\%)} = (W2 - W1)/W1 \times 100$$

W1 = mass before immersion
W2 = mass after immersion

(6) Dimensional change rate and area shrinkage rate

The separator was cut out accurately in a regular square of 100 mm x 100 mm in accordance with the vertical (MD) and horizontal (CD) directions, vertical and horizontal lengths were measured accurately, and, after that, the cut out separator was immersed in a 40% KOH solution for 30 minutes. After the immersion, vertical and horizontal lengths of the separator were measured accurately, and the dimensional change rate in the vertical and horizontal directions of the separator were obtained according to a formula below.

$$\text{Dimensional change rate (\%)} = \{(A1 - A2)/A1\} \times 100$$

A1 = length before immersion

A2 = length after immersion

Meanwhile, when the measured value of the dimensional change rate is positive, it represents the shrinkage rate of the separator. The area shrinkage rate of the separator is the value of the sum of the vertical and horizontal dimensional shrinkage rates.

(7) Air permeability

To the test piece attachment portion of the B-type measuring device described in JIS P 8117 (Paper and board - Determination of air permeance), an aperture diaphragm having a diameter of 6 mm was attached, and a time period necessary for 100 ml of air to pass through a portion of an area of 6 mm in diameter (28.26 mm$^2$) of the separator (sec/100ml) was measured.

(8) Electric resistance

The separator was inserted between platinum electrodes (electrodes with platinum black, having circular plate shape with 20 mm in diameter) positioned in parallel at intervals of about 2 mm immersed in a 40% KOH solution, and the increase in the electric resistance between electrodes along with the insertion was defined as the electric resistance of the separator. Meanwhile, the electric resistance between electrodes was measured using an LCR meter at a frequency of 1000 Hz. In the present measuring method, a measurement value is referred to as electric resistance, but the measuring method is a method of measuring an ionic resistance of the separator in the electrolytic solution (40% KOH solution).

(9) Hydrogen gas generation amount

The separator and the KOH electrolytic solution (which dissolves zinc oxide) were added to commercially available zinc alloy powder for an alkaline manganese battery anode, obtained by adding aluminum (Al), bismuth (Bi) and indium (In), the resultant substance was left to stand at 70°C for 10 days, and then the amount of generated hydrogen gas (volume $\mu$l of generated hydrogen gas relative to 1 g of zinc) was measured. Meanwhile, in the measurement of respective pulps, a constant amount of zinc alloy powder: separator: KOH electrolytic olution was collected at a mass ratio of 1:0.05:1, and the gas generation amount was measured using an apparatus similar to one in Fig. 2 disclosed in Japanese Patent Laid-Open No. 2008-171767.

[Table 2]

EP 2 811 544 A1

| SEPARATOR | NUMBER | TYPE OF MATERIAL | CONTENT RATIO OF α-CELLULOSE % | CRYSTALLINE STRUCTURE | BLENDING RATIO % | REGENERATED CELLULOSE FIBER TYPE | REGENERATED CELLULOSE FIBER BLENDING RATIO % | CFS ml | THICKNESS μm | BASIC WEIGHT g/m² | DENSITY g/cm³ | WET STRENGTH N/15mm | HOLDING RATION % | DIMENSIONAL CHANGE RATE VERTICAL % | DIMENSIONAL CHANGE RATE HORIZONTAL % | AREA SHRINKAGE RATE % | AIR PERMEABILITY sec./100ml | ELECTRIC RESISTANCE mΩ | GAS GENERATION AMOUNT μl/g |
|---|---|---|---|---|---|---|---|---|---|---|---|---|---|---|---|---|---|---|---|
| EXAMPLE1 | G | SOFTWOOD | 98.5 | II | 50 | | | 350 | 96.5 | 33.4 | 0.346 | 12.2 | 430 | 0.2 | 0.3 | 0.5 | 5.1 | 13.4 | 82 |
| EXAMPLE2 | F | SOFTWOOD | 98.1 | I + II | 50 | | | 350 | 95.3 | 32.9 | 0.345 | 13.0 | 420 | 0.3 | 0.4 | 0.7 | 6.8 | 13.5 | 85 |
| EXAMPLE3 | B | SOFTWOOD | 96.0 | I | 50 | | | 350 | 91.0 | 33.0 | 0.363 | 13.6 | 415 | 0.8 | 1.1 | 1.9 | 8.5 | 14.6 | 95 |
| EXAMPLE4 | C | SOFTWOOD | 94.7 | I | 50 | | | 350 | 90.1 | 33.2 | 0.368 | 13.6 | 415 | 0.9 | 1.1 | 2.0 | 9.6 | 14.8 | 100 |
| EXAMPLE5 | D | SOFTWOOD | 92.2 | I | 50 | | | 350 | 89.8 | 33.1 | 0.369 | 13.8 | 410 | 0.9 | 1.2 | 2.1 | 10.4 | 15.5 | 110 |
| COMPARATIVE EXAMPLE1 | M | SOFTWOOD | 97.5 | II | 50 | | | 350 | 87.3 | 32.9 | 0.377 | 14.1 | 400 | 0.3 | 0.4 | 0.7 | 20.5 | 16.4 | 140 |
| EXAMPLE6 | E | HARDWOOD | 97.6 | I | 20 | | | 500 | 100.7 | 33.1 | 0.329 | 17.6 | 420 | 0.2 | 0.3 | 0.5 | 3.0 | 12.5 | 85 |
| EXAMPLE7 | E | HARDWOOD | 97.6 | I | 70 | | | 500 | 93.2 | 33.2 | 0.356 | 10.5 | 450 | 1.0 | 1.5 | 2.5 | 7.2 | 13.6 | 90 |
| EXAMPLE8 | H | HARDWOOD | 98.3 | II | 90 | | | 500 | 84.6 | 32.5 | 0.384 | 6.5 | 500 | 0.9 | 1.4 | 2.3 | 9.6 | 14.9 | 90 |
| COMPARATIVE EXAMPLE2 | E | HARDWOOD | 97.6 | I | 15 | | | 500 | 111.4 | 33.4 | 0.300 | 21.3 | 360 | 0.1 | 0.2 | 0.3 | 1.0 | 9.4 | 85 |
| COMPARATIVE EXAMPLE3 | H | HARDWOOD | 98.3 | II | 97 | | | 500 | 82.5 | 32.8 | 0.398 | 4.0 | 510 | 1.5 | 2.2 | 3.7 | 10.4 | 15.6 | 100 |
| EXAMPLE9 | A | SOFTWOOD | 97.4 | I | 10 | LYOCELL | 10 | 350 | 105.4 | 33.6 | 0.319 | 16.3 | 440 | 0.2 | 0.3 | 0.5 | 4.0 | 10.6 | 85 |
| EXAMPLE10 | A | SOFTWOOD | 97.4 | I | 30 | LYOCELL | 20 | 350 | 100.2 | 32.9 | 0.328 | 13.1 | 500 | 0.5 | 0.7 | 1.2 | 12.4 | 11.8 | 90 |
| EXAMPLE11 | A | SOFTWOOD | 97.4 | I | 30 | LYOCELL | 40 | 350 | 99.8 | 33.0 | 0.331 | 12.4 | 520 | 0.7 | 1.0 | 1.7 | 15.3 | 12.3 | 90 |
| COMPARATIVE EXAMPLE4 | M | SOFTWOOD | 97.5 | II | 30 | LYOCELL | 20 | 350 | 93.6 | 33.2 | 0.355 | 14.5 | 490 | 0.3 | 0.4 | 0.7 | 17.7 | 14.1 | 130 |
| EXAMPLE12 | E | HARDWOOD | 97.6 | I | 30 | RAYON | 30 | WITHOUT REFINING 0 | 321.0 | 71.5 | 0.223 | 13.2 | 780 | 1.1 | 1.9 | 3.0 | 1.0 | 19.8 | 90 |
| EXAMPLE13 | F | SOFTWOOD | 98.1 | I + II | 75 | | | 0 | 55.2 | 32.2 | 0.583 | 5.5 | 350 | 1.5 | 0.3 | 1.8 | >2000 | 25.0 | 90 |
| EXAMPLE14 | E | HARDWOOD | 97.6 | I | 30 | LYOCELL | 30 | — | 85.4 | 31.2 | 0.365 | 12.8 | 440 | 0.3 | 0.5 | 0.8 | 50.5 | 12.5 | 88 |
| EXAMPLE15 | I | NON-WOOD MATERIAL | 99.2 | I | 40 | RAYON | 20 | 200 | 103.5 | 33.2 | 0.321 | 13.2 | 510 | 1.1 | 1.8 | 2.9 | 6.5 | 13.1 | 80 |
| EXAMPLE16 | J | NON-WOOD MATERIAL | 93.6 | I | 40 | | | 400 | 102.6 | 33.5 | 0.327 | 14.8 | 490 | 0.8 | 1.1 | 1.9 | 8.3 | 12.5 | 102 |
| EXAMPLE17 | K | NON-WOOD MATERIAL | 92.1 | I | 40 | | | 300 | 96.8 | 32.6 | 0.337 | 16.3 | 470 | 0.9 | 1.1 | 2.0 | 10.6 | 13.0 | 105 |
| EXAMPLE18 | L | NON-WOOD MATERIAL | 93.0 | I | 30 | LYOCELL | 20 | 180 | 110.0 | 32.8 | 0.298 | 12.4 | 520 | 0.7 | 1.0 | 1.7 | 12.5 | 10.5 | 105 |
| COMPARATIVE EXAMPLE5 | N | NON-WOOD MATERIAL | 97.0 | II | 40 | | | 300 | 97.5 | 32.4 | 0.332 | 14.2 | 480 | 0.4 | 0.5 | 0.9 | 10.1 | 13.1 | 138 |

Next, separators in Examples and Comparative Examples will be examined.

(Content ratio of $\alpha$-cellulose)

As shown in Table 2, in separators in Examples 1 to 5 and Comparative Example 1, the cellulose fiber is derived from a softwood pulp, and physical properties of respective separators were compared while setting the content ratio of the pulp to be 50%.

The separator in Example 1 using pulp G with a content ratio of $\alpha$-cellulose of 98.5% gave the gas generation amount of 82 $\mu$l/g. In contrast, the separator in Example 3 using pulp B with the content ratio of $\alpha$-cellulose of 96.0% gave the gas generation amount of 95 $\mu$l/g. Furthermore, the separator in Example 5 using pulp D with a content ratio of $\alpha$-cellulose of 92.2% gave the gas generation amount of 110 $\mu$l/g.

From the result, the hemicellulose content in the separator increases along with the reduction in the content ratio of $\alpha$-cellulose in a dissolving pulp, and thus it is known that the gas generation amount increases. Furthermore, along with the reduction in the content ratio of $\alpha$-cellulose in a dissolving pulp, the wet strength of the separator tends to increase and the holing ration tends to decrease.

In contrast, the separator in Comparative Example 1 using pulp M being a commercially available mercerized pulp gave the gas generation amount of 140 $\mu$l/g. It is known that the separator in Comparative Example 1 gives a larger gas generation rate, irrespective of a high content ratio of $\alpha$-cellulose in pulp M being as high as 97.5%. As described above, in the case of a separator using a mercerized pulp other than a dissolving pulp, even when the content ratio of $\alpha$-cellulose is high, hemicellulose that can not be removed by the mercerizing treatment remains, and thus the gas generation amount increases.

(Crystalline structure)

Examples 3 - 5 give separators in which a dissolving pulp from a softwood having the crystalline structure of cellulose I is used. These separators exhibited an area shrinkage rate of 1.9% to 2.1%.

On the other hand, the separator in Example 1 using pulp G being obtained by alkali-treating pulp A with 17.5% NaOH and having the crystalline structure of cellulose II, exhibited an area shrinkage rate of 0.5%. Furthermore, the separator in Example 2, using pulp F being obtained by alkali-treating pulp A with 12% NaOH and including the crystalline structure of cellulose I and cellulose II, exhibited an area shrinkage rate of 0.7%.

From the result, it is known that the use of a dissolving pulp having the crystalline structure of cellulose II even in a part thereof makes it possible to lower the dimensional shrinkage of the separator in the electrolytic solution.

(Blending amount of dissolving pulp)

Examples 6 - 8 and Comparative Examples 2 - 3 exhibit physical properties of separators, in which a dissolving pulp from a hardwood is used and the blending ratio of the dissolving pulp is varied.

Example 6 gives the separator with which 20% of Pulp E is blended, and Example 7 gives the separator with which 70 mass% of pulp E is blended. In addition, Comparative Example 2 gives the separator with which 15% of the same pulp E is blended. The separator in Comparative Example 2 has a blending ratio of the pulp as small as 15%, and thus, exhibits a wet strength as large as 21.3 N/15 mm and a holding ration rate as small as 360%. In this way, it is known that, since the content ratio of the cellulose fiber is small, the vinylon fiber mainly constituting the separator adheres strongly by an easily-soluble polyvinyl alcohol fiber dissolved at the time of papermaking. Furthermore, the separator in Comparative Example 2 exhibits air permeability as small as 1.0 second, and is poor in shielding characteristics of the separator.

In contrast to this, the separator in Example 6 in which the blending ratio of pulp E is 20 mass% exhibits a wet strength reduced to 17.6 N/15 mm, a holding ration increased to 420% and air permeability increased to 3.0sec/100ml. Furthermore, the separator in Example 7 in which the blending ratio of pulp E is 70 mass% exhibits a wet strength reduced to 10.5 N/15 mm, a holding ration rate increased to 450% and air permeability increased to 7.2 sec/100 ml.

Moreover, the separator in Example 7 exhibits an area shrinkage rate of 2.5%, and the separator exhibits a larger area shrinkage as compared with 0.3% for the separator in Comparative Example 2 and 0.5% for the separator in Example 6. In this way, it is known that the separator in Example 7 with which 70 mass% of pulp E having the crystalline structure of cellulose I is blended exhibits a large dimensional shrinkage in the electrolytic solution.

Example 8 gives the separator with which 90 mass% of pulp H having almost the crystalline structure of cellulose II is blended. The area shrinkage rate of the separator in Example 8 was 2.3%. As compared with the separator in Example 7 with which 70% of pulp E having the crystalline structure of cellulose I is blended, the separator in Example 8 exhibits a reduced area shrinkage rate although the blending ratio of a dissolving pulp is increased as much as 90 mass%.

From the result, it is known that the separator shows a reduced area shrinkage rate by including a dissolving pulp having the crystalline structure of cellulose II. In addition, when only a dissolving pulp having the crystalline structure of cellulose I is to be blended with the separator, the blending amount of the dissolving pulp is preferably set to be 70 mass% or less. Furthermore, when a dissolving pulp exceeding 70 mass% is to be blended, a dissolving pulp having the crystalline structure of cellulose II is preferably to be included.

Comparative Example 3 gives the separator with which 97 mass% of pulp H is blended. The separator in Comparative Example 3 exhibited a wet strength of 4.0 N/15 mm and an area shrinkage rate of 3.7%. That is, the wet strength is smaller and the area shrinkage rate is larger than the separators in Examples. Consequently, the separator in Comparative Example 3 has a higher possibility of being damaged when shock is added to the battery at the time of transportation or at the time of falling.

(Regenerated cellulose fiber)

Examples 9 - 11 give separators using a mixture of a dissolving pulp and the Lyocell fiber being a regenerated cellulose fiber, as a cellulose fiber. 10 mass% of a dissolving pulp and 10 mass% the Lyocell fiber are blended with the separator in Example 9, and the separator includes 20 mass% of a cellulose fiber in total. 30 mass% of a dissolving pulp and 20 mass% of the Lyocell fiber are blended with the separator in Example 10, and the separator includes 50 mass% of a cellulose fiber in total.

When making a comparison between Example 9 and Example 6 in which the blending ratio of the cellulose fiber is the same 20 mass%, the separator in Example 6 exhibits the holding ration of 420%, but the separator in Example 9 with which the Lyocell fiber is blended exhibits an improved holding ration of 440%.

Furthermore, when making a comparison between Example 10 and Examples 1 - 5 in which the blending ratio of the cellulose fiber is the same 50 mass%, separators in Examples 1 - 5 exhibit a holding ration of 410 - 430%, but the separator in Example 10 exhibits a holding ration increased to 500%. As described above, it is known that the holding ration of a separator increases by blending the Lyocell fiber being a regenerated cellulose fiber with the separator.

Furthermore, the separator in Example 6 exhibits an electric resistance of 12.5 mΩ, but the separator in Example 9 exhibits a reduced electric resistance such as 10.6 mΩ. Moreover, separators in Examples 1 - 5 exhibit an electric resistance of 13.4 mΩ - 15.5 mΩ, but the separator in Example 10 exhibits a reduced electric resistance such as 11. 8 mΩ. From the result, it is known that the electric resistance of a separator is reduced by blending the Lyocell fiber.

Generally, when the holding ration of a separator increases and the electric resistance decreases, the electrolytic solution that can be utilized for a discharge reaction increases and the internal resistance of the battery decreases. Accordingly, the use of a separator with which the Lyocell fiber is blended makes it possible to improve discharge characteristics of the battery.

In addition, there are blended, with the separator in Example 11, 30 mass% of a dissolving pulp and 40 mass% of the Lyocell fiber, and the separator includes 70 mass% of a cellulose fiber in total.

When a dissolving pulp and a regenerated cellulose fiber are blended in a separator as a cellulose fiber, a separator having a large electrolytic holding ration is obtained. However, when a holding ration for the electrolytic solution of a separator becomes large, the separator inevitably swells in the electrolytic solution and the thickness is increased. In particular, when the regenerated cellulose fiber is included in an amount of more than 60 mass% of the separator, the volume of the separator occupying the inside of the battery by swelling becomes large because the holding ration of the separator becomes too large. Consequently, in small-sized batteries such as the AA or AAA battery, the amount of the active material is required to be reduced and the improvement of battery performance becomes difficult. Accordingly, it is preferable to configure the separator by setting the dissolving pulp to be 10 mass% - 50 mass%, the regenerated cellulose fiber to be 10 mass% - 40 mass% and the alkali- resistance synthetic fiber to be the remnant, relative to the mass of the separator.

In Comparative Example 4, the separator was configured using pulp M that was a conventionally used commercially available mercerized pulp in the same blending amount as that of the pulp A being a dissolving pulp in the separator in Example 10.

The gas generation amount of the separator in Example 10 is 90 μl/g, but in contrast, the gas generation amount of the separator in Comparative Example 4 is 130 μl/g, which is larger than 90μl/g. From the result, it is known that the use of a commercially available mercerized pulp other than the dissolving pulp for a separator increases the corrosion of zinc alloy powder.

(Refining treatment)

The separator in Example 12 is a separator using an unrefined dissolving pulp from a hardwood and a rayon fiber and has a thickness of 321 μm and a basis weight of 71.5 g/m$^2$. Furthermore, the separator exhibits a holding ration as large as 780%.

A thick separator such as the separator in Example 12 occupies a large volume in the inside of a battery, and thus, is not suitable as a separator for small-sized alkaline batteries such as AA and AAA batteries. A thick separator such as the separator in Example 12 is a separator suitable for large-sized alkaline manganese batteries such as D size and C size batteries. The separator in Example 12 exhibits air permeability as low as 1.0 sec/100 ml but has a thickness as large as 321 $\mu$m, and thus an internal short circuit of the battery caused by a dendrite is not likely generated.

The separator in Example 13 includes a highly refined dissolving pulp of CSF of 0 ml. The separator in Example 13 has a density as high as 0.583 g/cm$^3$ and has air permeability as high as 2000 sec/100 ml or more. Consequently, it is a separator particularly excellent in the prevention effect of a dendrite and having high shielding characteristics.

Example 14 gives the stacked separator formed of two layers obtained by papermaking of a raw material including the Lyocell fiber highly refined so as to be 0 ml of a CSF value and an unrefined dissolving pulp through the use of a cylinder-inclined wire former combination paper machine. The separator in Example 14 exhibits an electric resistance as comparatively low as 12.5 m$\Omega$ by blending an unrefined dissolving pulp, although it exhibits air permeability as high as 50.5 sec/100 ml.

In addition, by the stacking, a more homogeneous separator can be obtained as compared with a single layer separator.

(Non-wood dissolving pulp)

Examples 15 - 18 give separators using a non-wood dissolving pulp.

The separator in Example 15 includes 60 mass% of a cellulose fiber in total, while blending a cotton linter dissolving pulp having a content ratio of $\alpha$-cellulose of 99.2% and a rayon fiber as a cellulose fiber.

There is blended, with the separator in Example 16, a sisal hemp dissolving pulp in an amount of 40 mass% as a cellulose fiber, and there is blended, with the separator in Example 17, a kenaf dissolving pulp in an amount of 40 mass%.

Example 18 gives the separator with which a bamboo dissolving pulp in an amount of 30 mass% and an unrefined Lyocell fiber in an amount of 20 mass% are blended as a cellulose fiber.

Separators in Examples 9 - 11 made use of a cellulose fiber obtained by mixing the Lyocell fiber and a dissolving pulp and by subjecting the same to refining treatment. In addition, in the separator in Example 18, the Lyocell fiber was used without refining.

An unrefined Lyocell fiber has a feature of exhibiting a larger rigidity than a refined Lyocell fiber, and when the unrefined Lyocell fiber is blended with a separator, the separator exhibits an improved compression resistance in the thickness direction. Consequently, when an unrefined Lyocell fiber is blended, the compression resistance of the separator in the thickness direction is improved, and also in the case where the separator is compressed by a reaction product of the active material (increase in volume) at a last stage of discharge of the battery, the electrolytic solution included in the separator is hardly lost and thus the life of the battery is improved.

There is blended, with the separator in Comparative Example 5, a pulp obtained by mercerizing a jute pulp for papermaking in an amount of 40 mass%. The separator in Comparative Example 5 exhibits a gas generation amount as large as 138 $\mu$l/g, in the same way as the separator in Comparative Example 1 with which a mercerized pulp from a softwood is blended. This is because hemicellulose hardly soluble in an alkaline solution remains in the pulp, even when a chemical pulp for papermaking is mercerized. It is considered that the corrosion of the anode active material is accelerated by the hemicellulose in the pulp and thus the gas generation amount is increased.

[Property test of battery]

Next, using each of separators according to Examples and Comparative Examples described in Table 2, the cathode active material and the anode active material were isolated, and 30 cylindrical type alkaline manganese batteries of the AA size (LR-6) having the configuration shown in Fig. 1 were produced, respectively.

An alkaline manganese battery 1 shown in Fig. 1 has a bottomed cylindrical cathode can 2, and a cathode terminal 2a is formed at one end portion. In the cathode can 2, a cylindrical cathode mixture 3 formed of manganese dioxide and graphite is press-fitted. In the inside of a separator 4 wound in a cylindrical shape, there is filled a gelled anode 5 obtained by dispersing and mixing a mercury-free zinc alloy powder in a gelled electrolytic solution. Furthermore, a anode collector 6 and a resin sealing body 7 for blocking an opening of the cathode can 2 are included, and a anode terminal plate 8 also serving as a anode terminal is welded to the head portion of the anode collector 6 on the resin sealing body 7. The cathode terminal side of the cylindrically wound separator 4 is sealed with a bottom paper 9, and the contact between the gelled anode 5 and the positive electrode can 2 is prevented. Moreover, the battery is packed with a resin exterior material 10 by adhering closely to the outer surface of the cathode can 2 in a state where the cathode terminal 2a and the anode terminal plate 8 are exposed.

The cylindrical alkaline manganese battery 1 was manufactured specifically according to the following method.

First, a separator cylinder was produced by winding each of the separators 4, the cylinder was caused to adhere closely to the inner wall of the cylinder being the cathode, and subsequently, thrust of the bottom paper seals the cathode terminal 2a side of the cylinder of the separator 4. After pouring the electrolytic solution, the gelled anode 5 was injected up to a prescribed position, the resin sealing body 7 mounted with the anode collector 6 was inserted, and an alkaline manganese battery was produced by caulking and fixing the end of the cathode can 2. The separator 4 was wound twice. Meanwhile, for the separator, the vertical and horizontal directions are defined, and, in the alkaline manganese battery produced this time, the vertical direction of the separator was wound into a cylinder, which was inserted into the cathode. Therefore, the horizontal direction of the separator is positioned in the direction linking the cathode terminal and the anode terminal plate of the battery.

(Transportation test of battery)

A transportation test was performed on the alkaline manganese battery produced by the above method.

In the transportation test, the produced alkaline manganese battery was loaded on a truck in a state of being packed in a box, which was transported through a distance of about 1000 km. After the transportation, the battery was left to stand for another a week. Then, the open-circuit voltage of the alkaline manganese battery was measured, an alkaline manganese battery exhibiting a voltage drop to 1.5 V or less was defined as a defective battery, and separators according to respective Examples and Comparative Examples in which the defective battery was found were examined.

Meanwhile, all the open-circuit voltages of alkaline manganese batteries measured directly after the production were 1.6 V or more. ○ was given to separators not resulting in the generation of a defective battery in the transportation test, and x was given to separators resulting in finding one or more defective batteries, which are described in Table 3.

(Discharge characteristics of battery)

A low-temperature light-load discharge test, a heavy-load discharge test, and the measurement of discharge capacity after storage were performed on each of ten alkaline manganese batteries in Examples and Comparative Examples that did not generate a defective battery. Results are shown in Table 3.

Meanwhile, the separator in Example 12 was too thick for the AA size alkaline manganese battery (LR-6) and the decrease in the amount of the anode gel is necessary, a comparison of discharge characteristics between batteries was not able to be made, and thus only the transportation test was performed and the separator in Example 12 was excluded from the discharge test.

The measuring method in the discharge test is as follows.

(1) Low-temperature light-load discharge test

The alkaline manganese battery was connected to a 300 Ω resistance at 0°C, which was discharged continuously to a termination voltage of 1.0 V, and the number of batteries of short life exhibiting a discharge time of a specified time period or less was checked. Meanwhile, ten batteries were subjected to testing. The low-temperature light-load discharge test utilizes test conditions under which the short circuit of the battery caused by electroconductive zinc oxide is easily generated.

(2) Heavy-load discharge test

The alkaline manganese battery was discharged at a constant current of 1000 mA under room temperature, and discharge time (minute) until the termination voltage of 1.0 V was measured. Meanwhile, ten batteries were subjected to testing and the average value of these ten batteries was obtained.

(3) Discharge capacity after storage

The alkaline manganese battery was stored for 2 months at 60°C, and after that, was discharged to a termination voltage of 0.9 V at a constant current of 350 mA under room temperature to measure discharge capacity (mAh). Meanwhile, ten batteries were subjected to testing and the average value of these ten batteries was obtained.

[Table 3]

| SEPARATOR | NUMBER | TYPE OF MATERIAL | CRYSTALLINE STRUCTURE | BLENDING RATIO % | TYPE | BLENDING RATIO % | CSF ml | THICKNESS μm | BASIC WEIGHT g/m² | DENSITY g/cm³ | WET STRENGTH N/15mm | HOLDING RATION % | AIR PERMEABILITY sec./100ml | ELECTRIC RESISTANCE mΩ | GAS GENERATION AMOUNT μl/g | TRANSPORTATION TEST EVALUATION | LOW-TEMPERATURE LIGHT-LOAD DISCHARGE TEST NUMBER OF ABNORMAL SAMPLE | HEAVY-LOAD DISCHARGE TEST MINUTE | DISCHARGE CAPACITY AFTER STORAGE mAh |
|---|---|---|---|---|---|---|---|---|---|---|---|---|---|---|---|---|---|---|---|
| EXAMPLE1 | G | SOFTWOOD | II | 50 | | | 350 | 96.5 | 33.4 | 0.346 | 12.2 | 430 | 5.1 | 13.4 | 82 | ○ | 0 | 32 | 870 |
| EXAMPLE2 | F | SOFTWOOD | I + II | 50 | | | 350 | 95.3 | 32.9 | 0.345 | 13.0 | 420 | 6.8 | 13.5 | 85 | ○ | 0 | 32 | 870 |
| EXAMPLE3 | F | SOFTWOOD | I | 50 | | | 350 | 91.0 | 33.0 | 0.363 | 13.5 | 415 | 8.5 | 14.6 | 95 | ○ | 0 | 31 | 850 |
| EXAMPLE4 | C | SOFTWOOD | I | 50 | | | 350 | 90.1 | 33.2 | 0.368 | 13.6 | 415 | 9.6 | 14.8 | 100 | ○ | 0 | 31 | 850 |
| EXAMPLE5 | D | SOFTWOOD | I | 50 | | | 350 | 89.8 | 33.1 | 0.369 | 13.8 | 410 | 10.4 | 15.5 | 110 | ○ | 0 | 31 | 840 |
| COMPARATIVE EXAMPLE1 | M | SOFTWOOD | II | 50 | | | 350 | 87.3 | 32.9 | 0.377 | 14.1 | 400 | 20.5 | 16.4 | 140 | ○ | 0 | 27 | 710 |
| EXAMPLE6 | E | HARDWOOD | I | 20 | | | 500 | 100.7 | 33.1 | 0.329 | 17.6 | 420 | 3.0 | 12.5 | 85 | ○ | 0 | 29 | 830 |
| EXAMPLE7 | E | HARDWOOD | I | 70 | | | 500 | 93.2 | 33.2 | 0.356 | 10.5 | 450 | 7.2 | 13.6 | 90 | ○ | 0 | 33 | 870 |
| EXAMPLE8 | H | HARDWOOD | II | 90 | | | 500 | 84.6 | 32.5 | 0.384 | 6.5 | 500 | 9.6 | 14.9 | 90 | ○ | 0 | 32 | 880 |
| COMPARATIVE EXAMPLE2 | E | HARDWOOD | I | 15 | | | 500 | 111.4 | 33.4 | 0.300 | 21.3 | 360 | 1.0 | 9.4 | 85 | ○ | 7 | 25 | 780 |
| COMPARATIVE EXAMPLE3 | H | HARDWOOD | II | 97 | | | 500 | 82.5 | 32.8 | 0.398 | 4.0 | 510 | 10.4 | 15.6 | 100 | × | — | — | — |
| EXAMPLE9 | A | SOFTWOOD | I | 10 | LYOCELL | 10 | 350 | 105.4 | 33.6 | 0.319 | 16.3 | 440 | 4.0 | 10.6 | 85 | ○ | 0 | 30 | 840 |
| EXAMPLE10 | A | SOFTWOOD | I | 30 | LYOCELL | 20 | 350 | 100.2 | 32.9 | 0.328 | 13.1 | 500 | 12.4 | 11.8 | 90 | ○ | 0 | 35 | 870 |
| EXAMPLE11 | A | SOFTWOOD | I | 30 | LYOCELL | 40 | 350 | 99.8 | 33.0 | 0.331 | 12.4 | 520 | 15.3 | 12.3 | 90 | ○ | 0 | 36 | 880 |
| COMPARATIVE EXAMPLE4 | M | SOFTWOOD | II | 30 | LYOCELL | 20 | 350 | 93.6 | 33.2 | 0.355 | 14.5 | 490 | 17.7 | 14.1 | 130 | ○ | 0 | 33 | 740 |
| EXAMPLE12 | E | HARDWOOD | I | 30 | RAYON | 30 | WITHOUT REFINING | 321.0 | 71.5 | 0.223 | 13.2 | 780 | 1.0 | 19.8 | 90 | ○ | — | — | — |
| EXAMPLE13 | F | SOFTWOOD | I + II | 75 | | | 0 | 55.2 | 32.2 | 0.583 | 5.5 | 350 | >2000 | 25.0 | 90 | ○ | 0 | 30 | 850 |
| EXAMPLE14 | E | HARDWOOD | I | 30 | LYOCELL | 30 | — | 85.4 | 31.2 | 0.365 | 12.8 | 440 | 50.5 | 12.5 | 88 | ○ | 0 | 34 | 870 |
| EXAMPLE15 | I | NON-WOOD MATERIAL | I | 40 | RAYON | 20 | 200 | 103.5 | 33.2 | 0.321 | 13.2 | 510 | 6.5 | 13.1 | 80 | ○ | 0 | 33 | 900 |
| EXAMPLE16 | J | NON-WOOD MATERIAL | I | 40 | | | 400 | 102.6 | 33.5 | 0.327 | 14.8 | 490 | 8.3 | 12.5 | 102 | ○ | 0 | 35 | 850 |
| EXAMPLE17 | K | NON-WOOD MATERIAL | I | 40 | | | 300 | 96.8 | 32.6 | 0.337 | 16.3 | 470 | 10.6 | 13.0 | 105 | ○ | 0 | 35 | 850 |
| EXAMPLE18 | L | NON-WOOD MATERIAL | I | 30 | LYOCELL | 20 | (180) | 110.0 | 32.8 | 0.298 | 12.4 | 520 | 12.5 | 10.5 | 105 | ○ | 0 | 36 | 880 |
| COMPARATIVE EXAMPLE5 | N | NON-WOOD MATERIAL | II | 40 | | | 300 | 97.5 | 32.4 | 0.332 | 14.2 | 480 | 10.1 | 13.1 | 138 | ○ | 0 | 30 | 720 |

(Transportation test)

From the result of the transportation test shown in Table 3, the voltage drop was recognized only for the battery in Comparative Example 3, and batteries in other Examples and Comparative Examples maintained a voltage of 1.5V or more, and no defective battery was recognized at all.

The defective battery in Comparative Example 3 that exhibited the voltage drop was disassembled and checked to recognize a tear at the end portion of the separator fixed with the resin sealing body, and to recognize a portion in which a short circuit was generated caused by the spill of the anode gel filled inside the separator to the cathode side. It is considered that the separator inside the battery was damaged by shock applied to the battery in the transportation, because the separator in Comparative Example 3 has a content ratio of a cellulose fiber as large as 97% and includes a small amount of synthetic fiber, to thereby give a wet strength as low as 4.0 N/15 mm and a dimensional shrinkage as large as 2.2% in the horizontal direction of the separator.

On the other hand, the separator in Example 8 has the content ratio of cellulose fiber of 90%, and shows the wet strength of 6.5N/15mm. The separator in Example 13 has the content ratio of cellulose fiber of 75% and shows the wet strength of 5.5N/15mm. In batteries using the separator in Example 8 or Example 13, no defect was recognized. From the result, it is considered that an internal short circuit can be prevented even when shock is applied to the battery in transportation or the like, if the wet strength of a separator is 5N/15mm or more.

(Low-temperature light-load discharge test)

Next, a discharge test was performed on batteries excluding those in Comparative Example 3 and Example 12. As a result of the discharge test, a battery of short life was generated among batteries in Comparative Example 2. In contrast, no battery of short life was generated among batteries in other Examples and Comparative Examples.

The battery in Comparative Example 2 uses a separator exhibiting air permeability as smallest as 1.0sec/100ml. Therefore, it is considered that the separator was poor in shielding characteristics and a short circuit was generated due to a dendrite of zinc oxide in the low-temperature light-load discharge test.

On the other hand, no battery of short life was generated among batteries in Example 6. Namely, from the result that no short life was generated among batteries in Example 6 using a separator exhibiting air permeability of 3.0 sec/100 ml, it is known that short life caused by a dendrite can be prevented when air permeability of a separator is 3.0 sec/100 ml or more. Meanwhile, the test was performed while setting the winding number of the separator to be twice in alkaline batteries of the present embodiment example, but when the winding number of the separator is further increased, the space between the cathode and the anode becomes larger and a battery of short life is hardly generated even in the case of a separator exhibiting air permeability of less than 3.0sec/100ml. Accordingly, the air permeability of the separator of the present embodiment is not limited to 3.0 sec/100 ml or more.

(Heavy-load discharge test)

Next, from the result of the heavy-load discharge test, the battery in Comparative Example 2 using the separator having a cellulose fiber content ratio as small as 15% and exhibiting a wet strength as largest as 21.3 N/15 mm, exhibited a discharge time as shortest as 25 minutes. It is considered that, since the cellulose fiber content ratio of the separator is low such as 15% in the battery in Comparative Example 2, the vinylon fiber being the main component of the separator is caused to firmly adhere to the soluble polyvinyl alcohol fiber to thereby give a small amount of the electrolytic solution to be held, and thus the discharge time of the battery became short. Meanwhile, in the separator in Comparative Example 2, the blending ratio of the easily-soluble polyvinyl alcohol fiber is 10 mass%. When the blending ratio of the easily-soluble polyvinyl alcohol fiber is set to be more than 20 mass%, the wet strength of the separator further increases. Moreover, pores in the separator are blocked by the easily-soluble polyvinyl alcohol dissolved in papermaking. Consequently, the holding ration of the separator is further reduced and the electric resistance of the separator increases remarkably. The heavy-load discharge characteristics of the battery using such separator further deteriorate.

When the heavy-load discharge test results of batteries in Examples 10 and 18 and batteries in Examples 1 to 5 having the same cellulose fiber blending ratio of 50 mass% are compared, batteries in Examples 10 and 18 exhibited discharge time of 35 - 36 minutes, while batteries in Examples 1 - 5 exhibited discharge time of 31 - 32 minutes. In batteries in Examples 10 and 18, the Lyocell fiber is blended with the separator. From the result, it is known that the holding ration of the separator is increased and the heavy-load discharge characteristics of the battery are improved through the use of a separator with which a regenerated cellulose fiber such as the Lyocell fiber has been blended.

(Discharge capacity after storage)

Respective discharge capacities of produced batteries measured after storage for 2 months at 60°C were 830 - 900 mAh for batteries in Examples 1 - 11 and Examples 13 - 18. In contrast, batteries in Comparative Examples 1, 4 and 5 using the separator including a conventional mercerized pulp exhibited discharge capacities of 710 mAh, 740 mAh and 720 mAh, respectively. From the result, the capacity is reduced in batteries in Comparative Examples using the separator including a conventional mercerized pulp.

The separator used for batteries in Comparative Examples 1, 4 and 5 includes a mercerized pulp having a large hemicellulose content. Therefore, it is considered that the hemicellulose dissolved in the electrolytic solution in the storage of the battery accelerated the corrosion of zinc alloy powder of the anode to thereby reduce the discharge capacity of the battery.

Meanwhile, although not described in Example, through the use of a dissolving pulp from a softwood having a content ratio of $\alpha$-cellulose of 91.0%, a separator having the same raw material blending and almost the same thickness and basis weight as the separator in Examples 1 - 5 was produced, the AA battery having the same specification was produced, and the discharge capacity was measured. The discharge capacity of the separator using the dissolving pulp having the content ratio of $\alpha$-cellulose of 91.0% was 790 mAh. On the other hand, in the battery in Example 5, in which the content ratio of $\alpha$-cellulose in the dissolving pulp included in the separator is 92.2%, the discharge capacity is 840 mAh. Accordingly, the content ratio of $\alpha$-cellulose in a dissolving pulp used for the separator is preferably 92% or more.

Meanwhile, in the above-described embodiments and Examples, the battery test regarding the separator was performed using a cylindrical type alkaline manganese battery, but the separator of the present invention can be used for not only a cylindrical alkaline manganese battery but also to an alkaline battery such as a silver oxide battery being a button type battery.

The separator of the silver oxide battery being a button type battery is required to be provided with resistance characteristics for oxidizing power of silver oxide being a cathode active material, to prevent a silver ion from moving to the anode and to hold the electrolytic solution sufficient for an electromotive reaction. Therefore, in the silver oxide battery, there is generally used a separator in which a graft polymerized polyethylene film excellent in an oxidation resistance, a cellophane film excellent in preventing a silver ion from moving and a solution -holding body excellent in solution -holing characteristics for the electrolytic solution are combined.

When the separator of the present invention is to be used for the silver oxide battery, the use as the solution -holding body that makes contact with the anode in the separator is preferable in particular. Recently, also in button type batteries such as a silver oxide battery, the elimination of mercury from the anode is advanced, and the production of button type batteries in which the gas generation is suppressed by using the separator of the present invention and a defect such as swelling of a battery case is not generated, becomes easy.

Reference Signs List

1: alkaline manganese battery, 2: cathode can, 2a: cathode terminal, 3: cathode mixture, 4: separator, 5: gelled anode, 6: anode collector, 7: resin sealing body, 8: anode terminal plate, 9: bottom paper, 10: resin exterior material

**Claims**

1. A separator for an alkaline battery, which is interposed between cathode and anode of the alkaline battery and is used to isolate active material of both electrodes, the separator comprising 20 - 90 mass% cellulose fiber, wherein the remainder includes an alkali- resistance synthetic fiber, and the cellulose fiber contains a dissolving pulp.

2. The separator for an alkaline battery according to claim 1, wherein the dissolving pulp and a regenerated cellulose fiber are included as the cellulose fiber.

3. The separator for an alkaline battery according to claim 2, wherein the regenerated cellulose fiber is an organic solvent-spun cellulose fiber.

4. The separator for an alkaline battery according to any of claims 1 to 3, wherein a content ratio of $\alpha$-cellulose of the dissolving pulp is 92% or more.

5. An alkaline battery in which a cathode active material and a anode active material are isolated by a separator, wherein a separator for an alkaline battery according to any of claims 1 to 4 is used as the separator.

# FIG. 1

## INTERNATIONAL SEARCH REPORT

| | International application No. |
|---|---|
| | PCT/JP2013/050693 |

**A. CLASSIFICATION OF SUBJECT MATTER**
*H01M2/16*(2006.01)i, *H01M6/06*(2006.01)i

According to International Patent Classification (IPC) or to both national classification and IPC

**B. FIELDS SEARCHED**

Minimum documentation searched (classification system followed by classification symbols)
H01M2/16, H01M6/06

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-004844 A  (Nippon Kodoshi Corp.),<br>05 January 2006 (05.01.2006),<br>paragraphs [0001], [0050], [0051], [0057] to<br>[0059]; example 6<br>& US 2006/0014080 A1    & DE 102005026319 A<br>& FR 2884056 A          & CN 1710733 A<br>& HK 1083569 A | 1,2,4,5<br>3 |
| Y | JP 6-231746 A  (Nippon Kodoshi Corp.),<br>19 August 1994 (19.08.1994),<br>claim 1<br>(Family: none) | 3 |
| A | JP 9-274901 A  (Nippon Kodoshi Corp.),<br>21 October 1997 (21.10.1997),<br>entire text<br>(Family: none) | 1-5 |

[X] Further documents are listed in the continuation of Box C.          [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 March, 2013 (07.03.13) | Date of mailing of the international search report<br>19 March, 2013 (19.03.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/050693

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-41333 A  (Mitsubishi Paper Mills Ltd.), 21 February 2008 (21.02.2008), entire text (Family: none) | 1-5 |
| P,A | WO 2012/036025 A1  (Kuraray Co., Ltd.), 22 March 2012 (22.03.2012), entire text & WO 2012/036025 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 54087824 A
- JP 2119049 A
- JP 2006236808 A
- JP 2008171767 A